# EUROPEAN PATENT APPLICATION

(11) **EP 4 685 922 A1**
(43) Date of publication of application: **28.01.2026**
(21) Application number: 23929130.5
(22) Date of filing: 27.03.2023
(51) Int. Cl.: H01M 10/613

(54) **ENERGY STORAGE SYSTEM**

(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: SUN, Lijun, Shanghai 200241 (CN); LU, Yanhua, Ningde, Fujian 352100 (CN); YU, Dongxu, Ningde, Fujian 352100 (CN)
(74) Representative: Gong, Jinping
(86) International application number: PCT/CN2023/084151
(87) International publication number: WO 2024/197528

(57) **Abstract**

This application discloses an energy storage system including an energy storage apparatus (100) and a cooling apparatus (200), where the energy storage apparatus (100) includes an energy storage module (110) and a power module (120), the cooling apparatus (200) includes a first heat exchange mechanism (210), and the energy storage module (110) and the power module (120) are in thermally-conductive connection with the first heat exchange mechanism (210).

## Description

### TECHNICAL FIELD

This application relates to the field of energy storage technology, and specifically relates to an energy storage system.

### BACKGROUND

In recent years, with the continuous development of new energy technologies, the market demand for energy storage systems has been increasing. An energy storage apparatus in an energy storage system typically includes an energy storage module and a power module. Since both the energy storage module and the power module generate heat during operation, in related technologies, an energy storage system requires two cooling apparatuses to cool the energy storage module and the power module separately. However, this leads to an increase in the volume of the energy storage system and increases the manufacturing costs of the energy storage system.

### SUMMARY

One objective of embodiments of this application is to provide an energy storage system aimed at solving the technical problem of increased volume and increased manufacturing costs of an energy storage system caused by providing two cooling apparatuses in the energy storage system to cool an energy storage module and a power module separately in related technologies.

To solve the above technical problem, the embodiments of this application adopt the following technical solution.

An embodiment of this application provides an energy storage system, where the energy storage system includes:
an energy storage apparatus including an energy storage module and a power module; and
a cooling apparatus including a first heat exchange mechanism, where the energy storage module and the power module is in thermally-conductive connection with the first heat exchange mechanism.

The energy storage system provided by this embodiment of this application has the beneficial effects that: in the energy storage system provided by this embodiment of this application, both the energy storage module and the power module are in thermally-conductive connection with the first heat exchange mechanism, enabling a cooling medium within the first heat exchange mechanism to simultaneously absorb heat generated during operation of the energy storage module and the power module, thereby achieving simultaneous cooling of the energy storage module and the power module. In other words, the energy storage module and the power module can share one cooling apparatus, effectively reducing the volume of the energy storage system and reducing the production costs of the energy storage system.

In some embodiments of this application, the first heat exchange mechanism includes a first circulation pipeline, and the energy storage module and the power module are in thermally-conductive connection with the first circulation pipeline.

By adopting the above technical solution, heat exchange between the energy storage module and the first heat exchange mechanism as well as heat exchange between the power module and the first heat exchange mechanism are facilitated.

In some embodiments of this application, the first heat exchange mechanism further includes a first sampling device, the first sampling device is configured to collect temperature data of a cooling medium within the first circulation pipeline, and the first sampling device is electrically connected to the power module.

By adopting the above technical solution, the first sampling device can transmit temperature data of the cooling medium within the first circulation pipeline to the power module, enabling the power module to determine, based on the temperature data, whether an actual cooling condition of the cooling apparatus meets cooling requirements of the power module. If the actual cooling condition of the cooling apparatus cannot meet the cooling requirements of the power module, the power module can activate a power-off protection function. Thus, the cooling apparatus possesses a temperature sampling function and can transmit temperature data to the power module to meet the functional requirements of the power module for the cooling apparatus, enabling the cooling apparatus to be used for cooling the energy storage module and the power module simultaneously, thereby achieving the purpose of allowing the energy storage module and the power module to share one cooling apparatus for cooling.

In some embodiments of this application, the first sampling device is disposed at a port of the first circulation pipeline close to a cooling medium inlet of the energy storage apparatus.

By adopting the above technical solution, the first sampling device can collect temperature data of the cooling medium located close to the cooling medium inlet of the energy storage apparatus, enabling the power module to more accurately determine, based on the temperature data, whether the actual cooling condition meets the cooling requirements of the power module, to ensure that the power module can timely activate the power-off protection function, thereby effectively improving the reliability of the energy storage system.

In some embodiments of this application, a plurality of first sampling devices are provided.

By adopting the above technical solution, a redundant design for the first sampling device is effectively achieved, thereby effectively improving the reliability of the energy storage system.

In some embodiments of this application, the first heat exchange mechanism further includes a second sampling device, the second sampling device is configured to collect pressure data or flow data of the cooling medium within the first circulation pipeline, and the second sampling device is electrically connected to the power module.

By adopting the above technical solution, the second sampling device can transmit pressure data or flow data of the cooling medium within the first circulation pipeline to the power module, enabling the power module to determine, based on the pressure data or flow data, whether an actual cooling condition of the cooling apparatus meets cooling requirements of the power module. If the actual cooling condition of the cooling apparatus cannot meet the cooling requirements of the power module, the power module can activate a power-off protection function. Thus, the cooling apparatus possesses a pressure or flow sampling function and can transmit pressure data or flow data to the power module to meet the functional requirements of the power module for the cooling apparatus, enabling the cooling apparatus to be used for cooling the energy storage module and the power module simultaneously, thereby achieving the purpose of allowing the energy storage module and the power module to share one cooling apparatus for cooling.

In some embodiments of this application, the second sampling device is disposed at a port of the first circulation pipeline close to the cooling medium inlet of the energy storage apparatus.

By adopting the above technical solution, the second sampling device can collect pressure data or flow data of the cooling medium located close to the cooling medium inlet of the energy storage apparatus, enabling the power module to more accurately determine, based on the pressure data or flow data, whether the actual cooling condition meets cooling requirements of the power module, to ensure that the power module can timely activate the power-off protection function, thereby effectively improving the reliability of the energy storage system.

In some embodiments of this application, a plurality of second sampling devices are provided.

By adopting the above technical solution, a redundant design for the second sampling device is effectively achieved, thereby effectively improving the reliability of the energy storage system.

In some embodiments of this application, the first heat exchange mechanism further includes a third sampling device configured to collect conductivity data of the cooling medium within the first circulation pipeline, and the third sampling device is electrically connected to the power module.

By adopting the above technical solution, the third sampling device can transmit conductivity data of the cooling medium within the first circulation pipeline to the power module, enabling the power module to determine, based on the conductivity data, whether an actual cooling condition of the cooling apparatus meets cooling requirements of the power module. If the actual cooling condition of the cooling apparatus cannot meet the cooling requirements of the power module, the power module can activate a power-off protection function. Thus, the cooling apparatus possesses a conductivity sampling function and can transmit conductivity data to the power module to meet the functional requirements of the power module for the cooling apparatus, thereby achieving the purpose of allowing the energy storage module and the power module to share the cooling apparatus for cooling.

In some embodiments of this application, the third sampling device is disposed at a port of the first circulation pipeline close to the cooling medium inlet of the energy storage apparatus.

By adopting the above technical solution, the third sampling device can collect conductivity data of the cooling medium located close to the cooling medium inlet of the energy storage apparatus, enabling the power module to more accurately determine, based on the conductivity data, whether the actual cooling condition meets cooling requirements of the power module, to ensure that the power module can timely activate the power-off protection function, thereby effectively improving the reliability of the energy storage system.

In some embodiments of this application, a plurality of third sampling devices are provided.

By adopting the above technical solution, a redundant design for the third sampling device is effectively achieved, thereby effectively improving the reliability of the energy storage system.

In some embodiments of this application, the first heat exchange mechanism further includes a first deionization device, and the first deionization device is disposed on the first circulation pipeline.

By adopting the above technical solution, the content of ions in the cooling medium within the first circulation pipeline is effectively reduced, thereby mitigating electrical corrosion in the energy storage apparatus and effectively improving the reliability of the energy storage system.

In some embodiments of this application, the cooling apparatus further includes a second heat exchange mechanism, and the second heat exchange mechanism is in thermally-conductive connection with the first heat exchange mechanism.

By adopting the above technical solution, the heat from the cooling medium within the first heat exchange mechanism is conveniently transferred outward, thereby achieving cooling of the energy storage module and the power module.

In some embodiments of this application, the cooling apparatus further includes a first heat exchange device, and the first heat exchange device is connected between the second heat exchange mechanism and the first heat exchange mechanism.

By adopting the above technical solution, heat exchange between the second heat exchange mechanism and the first heat exchange mechanism is effectively achieved, thereby reducing mutual influence between the second heat exchange mechanism and the first heat exchange mechanism.

In some embodiments of this application, the first heat exchange mechanism includes a first circulation pipeline, the energy storage module and the power module are in thermally-conductive connection with the first circulation pipeline, the second heat exchange mechanism includes a second circulation pipeline and a refrigeration unit disposed on the second circulation pipeline, and the first heat exchange device is connected between the second circulation pipeline and the first circulation pipeline.

By adopting the above technical solution, heat exchange between the second circulation pipeline and the first circulation pipeline is facilitated.

In some embodiments of this application, the cooling apparatus further includes a third heat exchange mechanism, and the second heat exchange mechanism and the first heat exchange mechanism are in thermally-conductive connection with each other via the third heat exchange mechanism.

By adopting the above technical solution, the length of a cooling pipeline of the first heat exchange mechanism is effectively shortened, thereby reducing the pressure of the cooling medium within the first heat exchange mechanism to ensure that an operating pressure of the energy storage apparatus is within a safe range.

In some embodiments of this application, the cooling apparatus further includes a first heat exchange device and a second heat exchange device, the first heat exchange device is connected between the second heat exchange mechanism and the third heat exchange mechanism, and the second heat exchange device is connected between the third heat exchange mechanism and the first heat exchange mechanism.

By adopting the above technical solution, heat exchange between the second heat exchange mechanism and the third heat exchange mechanism as well as heat exchange between the third heat exchange mechanism and the first heat exchange mechanism are effectively achieved, thereby reducing mutual influence between the second heat exchange mechanism and the third heat exchange mechanism as well as mutual interference between the third heat exchange mechanism and the first heat exchange mechanism.

In some embodiments of this application, the first heat exchange mechanism includes a first circulation pipeline, the energy storage module and the power module are in thermally-conductive connection with the first circulation pipeline, the second heat exchange mechanism includes a second circulation pipeline and a refrigeration unit disposed on the second circulation pipeline, the third heat exchange mechanism includes a third circulation pipeline, the first heat exchange device is connected between the second circulation pipeline and the third circulation pipeline, and the second heat exchange device is connected between the third circulation pipeline and the first circulation pipeline.

By adopting the above technical solution, heat exchange between the second circulation pipeline and the third circulation pipeline as well as heat exchange between the third circulation pipeline and the first circulation pipeline are facilitated.

In some embodiments of this application, a plurality of third heat exchange mechanisms are provided, and the second heat exchange mechanism is in thermally-conductive connection with the plurality of third heat exchange mechanisms.

By adopting the above technical solution, the second heat exchange mechanism can simultaneously exchange heat with the plurality of third heat exchange mechanisms, effectively improving the operational efficiency of the cooling apparatus.

In some embodiments of this application, a plurality of first heat exchange mechanisms are provided, and the third heat exchange mechanism is in thermally-conductive connection with the plurality of first heat exchange mechanisms.

By adopting the above technical solution, the third heat exchange mechanism can simultaneously exchange heat with the plurality of first heat exchange mechanisms, effectively improving the operational efficiency of the cooling apparatus.

In some embodiments of this application, the energy storage system further includes an energy storage compartment and a temperature and humidity adjustment apparatus, the energy storage apparatus is disposed within the energy storage compartment, and the temperature and humidity adjustment apparatus includes a fourth sampling device, where the fourth sampling device is configured to collect temperature and humidity data within the energy storage compartment.

By adopting the above technical solution, monitoring of the temperature and humidity within the energy storage compartment is facilitated.

In some embodiments of this application, the temperature and humidity adjustment apparatus further includes a temperature and humidity adjustment unit, an adjustment working end of the temperature and humidity adjustment unit is connected to the energy storage compartment, and the fourth sampling device is electrically connected to the temperature and humidity adjustment unit.

By adopting the above technical solution, condensation on an outer pipe wall of a pipeline of the cooling apparatus is effectively mitigated, thereby effectively improving the cooling effect of the cooling apparatus.

### BRIEF DESCRIPTION OF DRAWINGS

To more clearly illustrate the technical solutions in the embodiments of this application, the accompanying drawings required for use in the embodiments or exemplary technical descriptions are briefly introduced below. It is apparent that the accompanying drawings described below are merely some embodiments of this application, and for those of ordinary skill in the art, other accompanying drawings can be obtained based on these accompanying drawings without creative effort.
FIG. 1 is a structural schematic diagram of an energy storage system according to an embodiment of this application;
FIG. 2 is a structural schematic diagram of an energy storage system according to another embodiment of this application;
FIG. 3 is a structural schematic diagram of an energy storage apparatus according to an embodiment of this application;
FIG. 4 is a structural schematic diagram of a battery in an energy storage module shown in FIG. 3;
FIG. 5 is a structural schematic diagram of a first filter device according to an embodiment of this application; and
FIG. 6 is a structural schematic diagram of a cooling apparatus according to an embodiment of this application.

### Description of reference signs:

100. energy storage apparatus; 110. energy storage module; 111. battery; 1111. box; 11111. first portion; 11112. second portion; 1112. battery cell; 120. power module; 130. cabinet;
200. cooling apparatus; 210. first heat exchange mechanism; 211. first circulation pipeline; 212. first sampling device; 213. second sampling device; 214. first power pump; 215. third sampling device; 216. first deionization device; 217. first filter device; 2171. first filter body; 2172. first pressure detection unit; 218. first pressure stabilization device; 220. second heat exchange mechanism; 221. second circulation pipeline; 222. refrigeration unit; 230. third heat exchange mechanism; 231. third circulation pipeline; 232. second power pump; 233. fifth sampling device; 234. sixth sampling device; 235. seventh sampling device; 236. second deionization device; 237. second filter device; 238. second pressure stabilization device; 240. first heat exchange device; 250. second heat exchange device;
300. energy storage compartment;
400. temperature and humidity adjustment apparatus; 410. temperature and humidity adjustment unit; and 420. fourth sampling device.

### DESCRIPTION OF EMBODIMENTS

To make the objectives, technical solutions, and advantages of this application clearer, this application is further described in detail below with reference to the drawings and embodiments. It should be understood that the specific embodiments described herein are merely used to explain this application and are not intended to limit this application.

It should be noted that when a component is referred to as being "fixed to" or "disposed on" another component, it may be directly on the another component or indirectly on the another component. When a component is referred to as being "connected to" another component, it may be directly or indirectly connected to the another component. The terms "upper", "lower", "left", "right", and the like indicate orientations or positional relationships based on the orientations or positional relationships shown in the drawings, and are merely for ease of description rather than for indicating or implying that the referred apparatus or element must have a specific orientation and be constructed or operated in a specific orientation, and thus should not be construed as limiting this application. For those of ordinary skill in the art, the specific meanings of these terms can be understood according to specific circumstances. The terms "first", "second", "third", "fourth", "fifth", "sixth", and "seventh" are used merely for ease of description and should not be understood as indicating or implying relative importance or implicitly indicating the number of technical features. "A plurality of" means two or more, unless otherwise specifically defined.

An energy storage system is a device that realizes the storage and output of electrical energy through conversion between electrical energy and chemical energy. An energy storage system typically includes an energy storage apparatus and a cooling apparatus, where the cooling apparatus is configured to cool the energy storage apparatus.

In related technologies, both the energy storage module and the power module of the energy storage apparatus generate heat during operation. To cool the energy storage module and the power module, the energy storage system is typically provided with two cooling apparatuses: one cooling apparatus is configured to cool the energy storage module, and the other cooling apparatus is configured to cool the power module. However, the two cooling apparatuses provided simultaneously occupy a large internal space of the energy storage system, thereby increasing the volume of the energy storage system and significantly increasing the production costs of the energy storage system.

To reduce the volume of the energy storage system and the production costs of the energy storage system, an embodiment of this application provides an energy storage system. A cooling apparatus of the energy storage system includes a first heat exchange mechanism. An energy storage module and a power module are in thermally-conductive connection with the first heat exchange mechanism, enabling a cooling medium within the first heat exchange mechanism to simultaneously absorb heat generated during operation of the energy storage module and the power module, thereby achieving simultaneous cooling of the energy storage module and the power module. In other words, the energy storage module and the power module can share one cooling apparatus, effectively reducing the volume of the energy storage system and reducing the production costs of the energy storage system.

The energy storage system disclosed in this embodiment of this application can be used as a backup power source in an electric power system, for performing peak-load shifting in a case of uneven power supply, or for frequency regulation in a case of high load or high power generation in the electric power system. Certainly, the application scenarios of the energy storage system are not limited thereto. For example, the energy storage system may alternatively be applied in a photovoltaic storage power generation system to store electrical energy generated by the photovoltaic storage power generation system. The application scenarios of the energy storage system are not specifically limited herein.

The energy storage system provided by this embodiment of this application is described below with reference to the accompanying drawings.

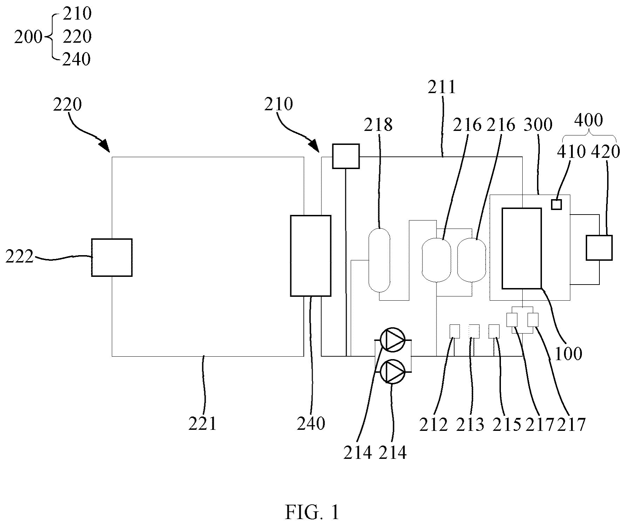

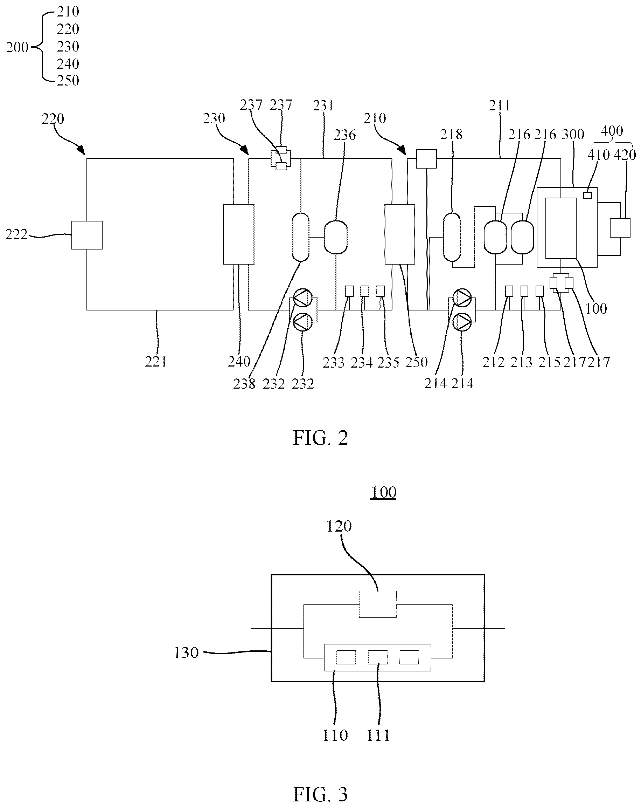

Referring to both FIG. 1 and FIG. 2, the energy storage system provided by this embodiment of this application includes an energy storage apparatus 100 and a cooling apparatus 200. The energy storage apparatus 100 includes an energy storage module 110 and a power module 120. The cooling apparatus 200 includes a first heat exchange mechanism 210, and the energy storage module 110 and the power module 120 are in thermally-conductive connection with the first heat exchange mechanism 210.

Referring to FIG. 3, the energy storage apparatus 100 may further include a cabinet 130, where the cabinet 130 is configured to accommodate the energy storage module 110 and the power module 120.

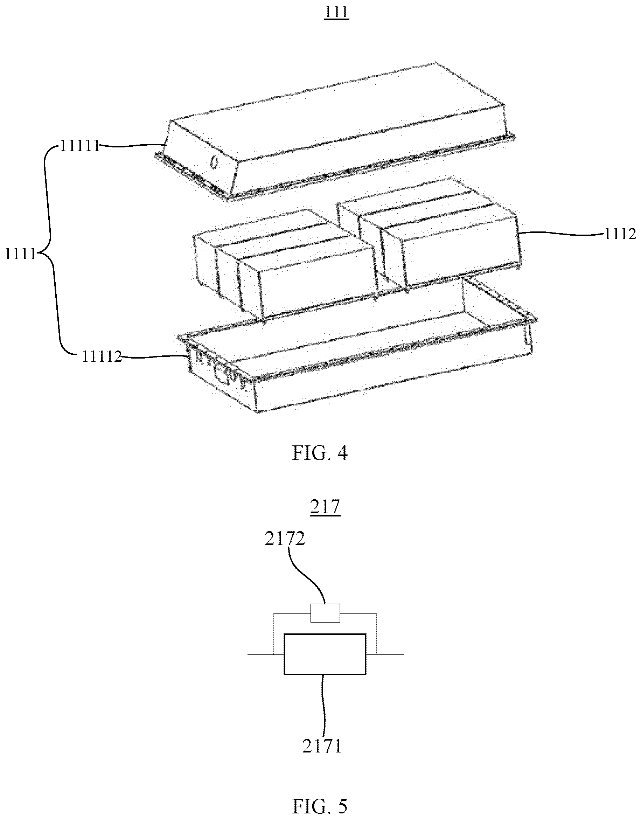

Referring to both FIG. 3 and FIG. 4, the energy storage module 110 includes a battery 111, and a plurality of batteries 111 may be provided, where the plurality of batteries 111 are accommodated within the cabinet 130. The battery 111 includes a box 1111, a battery cell 1112, and a battery 111 management unit (not shown in the figures). The box 1111 is configured to provide an accommodation space for the battery cell 1112 and the battery 111 management unit, and the box 1111 may adopt various structures. In some embodiments, the box 1111 may include a first portion 11111 and a second portion 11112, where the first portion 11111 and the second portion 11112 cover each other, and the first portion 11111 and the second portion 11112 jointly define the accommodation space for accommodating the battery cell 1112 and the battery 111 management unit. The second portion 11112 may be a hollow structure with an opening at one end, and the first portion 11111 may be a plate-like structure, where the first portion 11111 covers the open side of the second portion 11112, so that the first portion 11111 and the second portion 11112 jointly define the accommodation space. Alternatively, the first portion 11111 and the second portion 11112 may each be a hollow structure with an opening on one side, and the open side of the first portion 11111 covers the open side of the second portion 11112. Certainly, the box 1111 formed by the first portion 11111 and the second portion 11112 may have various shapes, such as a cylinder and a cuboid.

In the battery 111, a plurality of battery cells 1112 may be provided, and the plurality of battery cells 1112 may be connected in series, parallel, or series-parallel, where series-parallel connection refers to a combination of series connection and parallel connection of the plurality of battery cells 1112. The plurality of battery cells 1112 may be directly connected in series, parallel, or series-parallel, and then an entirety formed the plurality of battery cells 1112 is accommodated in the box 1111. Certainly, the battery 111 may alternatively be formed by first connecting a plurality of battery cells 1112 in series, parallel, or series-parallel to form a battery module, and then connecting a plurality of battery modules in series, parallel, or series-parallel to form an entirety which is accommodated in the box 1111.

Each battery cell 1112 may be a secondary battery or a primary battery, and it may alternatively be a lithium-sulfur battery, a sodium-ion battery, or a magnesium-ion battery, which is not limited thereto. The battery cell 1112 may be cylindrical, flat, cuboid, or of other shapes.

Certainly, in some embodiments, the battery 111 may not include the box 1111, but instead, a plurality of battery cells 1112 are electrically connected and assembled into the cabinet 130 as an entirety through a necessary fixing structure.

The battery management unit is electrically connected to the battery cell 1112 and is configured to monitor an operating state of the battery cell 1112. For example, the battery management unit can collect operating temperature data of the battery cell 1112 and perform comparative analysis on the operating temperature data of the battery cell 1112 to determine whether an actual cooling condition of the cooling apparatus 200 meets the cooling requirements of the battery cell 1112. If the actual cooling condition of the cooling apparatus 200 cannot meet the cooling requirements of the battery cell 1112, the battery management unit can control the battery cell 1112 to stop operating to avoid overheating so as not to damage the battery cell 1112.

The power module 120 is electrically connected to the energy storage module 110 and is configured to convert direct current provided by the energy storage module 110 into alternating current. Optionally, the power module 120 may be, but is not limited to, an IGBT (Insulated Gate Bipolar Transistor, Insulated Gate Bipolar Transistor) power module, a MOSFET (Metal-Oxide-Semiconductor Field-Effect Transistor, Metal-Oxide-Semiconductor Field-Effect Transistor) power module, and a silicon carbide power module. This is not specifically limited herein.

The energy storage apparatus 100 may further include a first controller, where the first controller is electrically connected to the power module 120 to control the operation of the power module 120.

The first heat exchange mechanism 210 is configured to cool the energy storage module 110 and the power module 120. The thermally-conductive connection between the first heat exchange mechanism 210 and the energy storage module 110 refers to the existence of a heat conduction path between the first heat exchange mechanism 210 and the energy storage module 110, and heat from the energy storage module 110 can be transferred to the first heat exchange mechanism 210 through the heat conduction path.

In some embodiments, heat conduction between the first heat exchange mechanism 210 and the energy storage module 110 is achieved through a fluid medium. The fluid medium may be, but is not limited to, water, oil, and air.

In some other embodiments, heat conduction between the first heat exchange mechanism 210 and the energy storage module 110 is achieved through a solid medium. The solid medium may be, but is not limited to, copper, aluminum, and iron.

In still some other embodiments, heat conduction between the first heat exchange mechanism 210 and the energy storage module 110 is achieved through a combination of a fluid medium and a solid medium. For example, the heat from the energy storage module 110 is first transferred to the solid medium, then transferred to the fluid medium through the solid medium, and ultimately transferred to the first heat exchange mechanism 210 through the fluid medium.

Similarly, the thermally-conductive connection between the first heat exchange mechanism 210 and the power module 120 refers to the existence of a heat conduction path between the first heat exchange mechanism 210 and the power module 120, and heat from the power module 120 can be transferred to the first heat exchange mechanism 210 through the heat conduction path.

In some embodiments, heat conduction between the first heat exchange mechanism 210 and the power module 120 is achieved through a fluid medium. The fluid medium may be, but is not limited to, water, oil, and air.

In some other embodiments, heat conduction between the first heat exchange mechanism 210 and the power module 120 is achieved through a solid medium. The solid medium may be, but is not limited to, copper, aluminum, and iron.

In still some other embodiments, heat conduction between the first heat exchange mechanism 210 and the power module 120 is achieved through a combination of a fluid medium and a solid medium. For example, the heat from the power module 120 is first transferred to the solid medium, then transferred to the fluid medium through the solid medium, and ultimately transferred to the first heat exchange mechanism 210 through the fluid medium.

In the energy storage system provided by this embodiment of this application, the energy storage module 110 and the power module 120 are in thermally-conductive connection with the first heat exchange mechanism 210, enabling a cooling medium within the first heat exchange mechanism 210 to simultaneously absorb heat generated during operation of the energy storage module 110 and the power module 120, thereby achieving simultaneous cooling of the energy storage module 110 and the power module 120. In other words, the energy storage module 110 and the power module 120 can share one cooling apparatus 200, effectively reducing the volume of the energy storage system and reducing the production costs of the energy storage system.

In some embodiments of this application, referring to both FIG. 1 and FIG. 2, the first heat exchange mechanism 210 includes a first circulation pipeline 211, and the energy storage module 110 and the power module 120 are in thermally-conductive connection with the first circulation pipeline 211.

The first circulation pipeline 211 is configured to provide a space for cyclic flowing of the cooling medium. Optionally, the first circulation pipeline 211 forms a loop structure. The loop structure may be, but is not limited to, a square loop structure and a circular loop structure. This is not specifically limited herein. In some embodiments, the first heat exchange mechanism 210 further includes a first power pump 214, where the first power pump 214 is disposed on the first circulation pipeline 211 and is configured to provide flow power for the cooling medium. A plurality of first power pumps 214 may be provided, and the plurality of first power pumps 214 are connected in parallel to achieve a redundant design for the first power pumps 214. Optionally, the first power pump 214 may be, but is not limited to, a gear pump, a vane pump, a plunger pump, and a screw pump. This is not specifically limited herein.

The cooling apparatus 200 may further include a second controller, where the first power pump 214 is electrically connected to the second controller, and the second controller controls the operation of the first power pump 214.

The thermally-conductive connection of the energy storage module 110 and the power module 120 to the first circulation pipeline 211 refers to the existence of a heat conduction path between the energy storage module 110 and the first circulation pipeline 211 as well as a heat conduction path between the power module 120 and the first circulation pipeline 211, and the heat generated during operation of the energy storage module 110 can be transferred to the cooling medium within the first circulation pipeline 211 through the heat conduction path, and similarly, the heat generated during operation of the power module 120 can be transferred to the cooling medium within the first circulation pipeline 211 through the heat conduction path.

By adopting the above technical solution, heat exchange between the energy storage module 110 and the first heat exchange mechanism 210 as well as heat exchange between the power module 120 and the first heat exchange mechanism 210 are facilitated.

In some embodiments of this application, referring to both FIG. 1 and FIG. 2, the first heat exchange mechanism 210 includes a first sampling device 212, where the first sampling device 212 is configured to collect temperature data of the cooling medium within the first circulation pipeline 211, and the first sampling device 212 is electrically connected to the power module 120.

The first sampling device 212 is configured to collect temperature data of the cooling medium within the first circulation pipeline 211. Optionally, the first sampling device 212 may be, but is not limited to, a thermistor sensor, a thermocouple sensor, and a platinum resistance temperature sensor. This not specifically limited herein. In some embodiments, a body portion of the first sampling device 212 may be disposed on an outer pipe wall of the first circulation pipeline 211, and a monitoring end of the first sampling device 212 extends into the first circulation pipeline 211 to collect temperature data of the cooling medium. In some other embodiments, the first sampling device 212 may alternatively be entirely disposed within the first circulation pipeline 211 to collect temperature data of the cooling medium.

The electrical connection between the first sampling device 212 and the power module 120 refers to the existence of an electrical signal transmission path between the first sampling device 212 and the power module 120, and the temperature data of the cooling medium collected by the first sampling device 212 can be transmitted to the power module 120 through the electrical signal transmission path.

In some embodiments, the first sampling device 212 is electrically connected to the second controller, the second controller is electrically connected to the first controller, and the temperature data of the cooling medium collected by the first sampling device 212 is transmitted to the second controller and then transmitted to the first controller by the second controller. The first controller determines, based on the temperature data, whether to activate a power-off protection function of the power module 120.

By adopting the above technical solution, the first sampling device 212 can transmit temperature data within the first circulation pipeline 211 to the power module 120, enabling the power module 120 to determine, based on the temperature data, whether an actual cooling condition of the cooling apparatus 200 meets cooling requirements of the power module 120. If the actual cooling condition of the cooling apparatus 200 cannot meet the cooling requirements of the power module 120, the power module 120 can activate the power-off protection function. Thus, the cooling apparatus 200 possesses a temperature sampling function and can transmit temperature data to the power module 120 to meet the functional requirements of the power module 120 for the cooling apparatus 200, enabling the cooling apparatus 200 to be used for cooling the energy storage module 110 and the power module 120 simultaneously, thereby achieving the purpose of allowing the energy storage module 110 and the power module 120 to share one cooling apparatus 200 for cooling.

In some embodiments of this application, referring to both FIG. 1 and FIG. 2, the first sampling device 212 is disposed at a port of the first circulation pipeline 211 close to a cooling medium inlet of the energy storage apparatus 100.

Specifically, the energy storage apparatus 100 includes a cooling medium inlet and a cooling medium outlet, the first circulation pipeline 211 includes a low-temperature cooling medium outlet, the first circulation pipeline 211 includes a high-temperature cooling medium inlet, the low-temperature cooling medium outlet is connected to the cooling medium inlet of the energy storage apparatus 100, the high-temperature cooling medium inlet is connected to the cooling medium outlet of the energy storage apparatus 100, and the first sampling device 212 is disposed at a position of the first circulation pipeline 211 close to the low-temperature cooling medium outlet.

By adopting the above technical solution, the first sampling device 212 can collect temperature data of the cooling medium located close to the cooling medium inlet of the energy storage apparatus 100, enabling the power module 120 to more accurately determine, based on the temperature data, whether the actual cooling condition meets cooling requirements of the power module 120, to ensure that the power module 120 can timely activate the power-off protection function, thereby effectively improving the reliability of the energy storage system.

In some embodiments of this application, a plurality of first sampling devices 212 are provided.

The number of the first sampling devices 212 may be determined based on actual application needs. For example, two first sampling devices 212 are provided. When both the two first sampling devices 212 are in a normal operating state, temperature data collected by either of the first sampling devices 212 can be transmitted to the power module 120. If one of the first sampling devices 212 has a fault, temperature data collected by the other first sampling device 212 can be transmitted to the power module 120 to ensure that the power module 120 can normally obtain temperature data of the cooling medium.

By adopting the above technical solution, a redundant design for the first sampling device 212 is effectively achieved, thereby effectively improving the reliability of the energy storage system.

In some embodiments of this application, three first sampling devices 212 are provided.

When all the three first sampling devices 212 are in a normal operating state, a "two-out-of-three" logic determining method can be adopted. To be specific, temperature data collected by any two of the three first sampling devices 212 is transmitted to the power module 120. If one of the three first sampling devices 212 has a fault, the method can be switched to a "one-out-of-two" logic determining method. To be specific, temperature data collected by one of the two first sampling devices 212 in a normal operating state is transmitted to the power module 120. If two of the three first sampling devices 212 have a fault, the method can be switched to a "one-out-of-one" logic determining method. To be specific, temperature data collected by the first sampling device 212 in a normal operating state is transmitted to the power module 120.

By adopting the above technical solution, the accuracy of collecting the temperature data of the cooling medium within the first circulation pipeline 211 is effectively improved, thereby reducing erroneous power-off situations of the power module 120 and further improving the reliability of the energy storage system.

In some embodiments of this application, referring to both FIG. 1 and FIG. 2, the first heat exchange mechanism 210 further includes a second sampling device 213, where the second sampling device 213 is configured to collect pressure data or flow data of the cooling medium within the first circulation pipeline 211, and the second sampling device 213 is electrically connected to the power module 120.

The second sampling device 213 is configured to collect pressure data or flow data of the cooling medium within the first circulation pipeline 211. In other words, the second sampling device 213 may be a pressure sampling device, and the pressure sampling device may be, but is not limited to, a diffused silicon pressure transmitter, a semiconductor piezoelectric impedance diffusion pressure sensor, and an electrostatic capacity-type pressure sensor. This is not specifically limited herein. The second sampling device 213 may alternatively be a flow sampling device, and the flow sampling device may be, but is not limited to, a centrifugal flow sensor, a water resistance flow sensor, and a dynamic pressure head flow sensor. This is not specifically limited herein. In some embodiments, a body portion of the second sampling device 213 may be disposed on an outer pipe wall of the first circulation pipeline 211, and a monitoring end of the second sampling device 213 extends into the first circulation pipeline 211 to collect pressure data or flow data of the cooling medium. In some other embodiments, the second sampling device 213 may alternatively be entirely disposed within the first circulation pipeline 211 to collect pressure data or flow data of the cooling medium.

The electrical connection between the second sampling device 213 and the power module 120 refers to the existence of an electrical signal transmission path between the second sampling device 213 and the power module 120, and the pressure data or flow data of the cooling medium collected by the second sampling device 213 can be transmitted to the power module 120 through the electrical signal transmission path.

In some embodiments, the second sampling device 213 is electrically connected to the second controller, the second controller is electrically connected to the first controller, and the pressure data or flow data of the cooling medium collected by the second sampling device 213 is transmitted to the second controller and then transmitted to the first controller by the second controller. The first controller determines, based on the pressure data or flow data, whether to activate the power-off protection function of the power module 120.

By adopting the above technical solution, the second sampling device 213 can transmit pressure data or flow data within the first circulation pipeline 211 to the power module 120, enabling the power module 120 to determine, based on the pressure data or flow data, whether an actual cooling condition of the cooling apparatus 200 meets cooling requirements of the power module 120. If the actual cooling condition of the cooling apparatus 200 cannot meet the cooling requirements of the power module 120, the power module 120 can activate the power-off protection function. Thus, the cooling apparatus 200 possesses a pressure or flow sampling function and can transmit pressure data or flow data to the power module 120 to meet the functional requirements of the power module 120 for the cooling apparatus 200, enabling the cooling apparatus 200 to be used for cooling the energy storage module 110 and the power module 120 simultaneously, thereby achieving the purpose of allowing the energy storage module 110 and the power module 120 to share one cooling apparatus 200 for cooling.

In some embodiments of this application, referring to both FIG. 1 and FIG. 2, the second sampling device 213 is disposed at a port of the first circulation pipeline 211 close to the cooling medium inlet of the energy storage apparatus 100.

Specifically, the energy storage apparatus 100 includes a cooling medium inlet and a cooling medium outlet, the first circulation pipeline 211 includes a low-temperature cooling medium outlet, the first circulation pipeline 211 includes a high-temperature cooling medium inlet, the low-temperature cooling medium outlet is connected to the cooling medium inlet of the energy storage apparatus 100, the high-temperature cooling medium inlet is connected to the cooling medium outlet of the energy storage apparatus 100, and the second sampling device 213 is disposed at a position of the first circulation pipeline 211 close to the low-temperature cooling medium outlet.

By adopting the above technical solution, the second sampling device 213 can collect pressure data or flow data of the cooling medium located close to the cooling medium inlet of the energy storage apparatus 100, enabling the power module 120 to more accurately determine, based on the pressure data or flow data, whether the actual cooling condition meets cooling requirements of the power module 120, to ensure that the power module 120 can timely activate the power-off protection function, thereby effectively improving the reliability of the energy storage system.

In some embodiments of this application, a plurality of second sampling devices 213 are provided.

The number of the second sampling devices 213 may be determined based on actual application needs. For example, two second sampling devices 213 are provided. When both the two second sampling devices 213 are in a normal operating state, pressure data or flow data collected by either of the second sampling devices 213 can be transmitted to the power module 120. If one of the second sampling devices 213 has a fault, pressure data or flow data collected by the other second sampling device 213 can be transmitted to the power module 120 to ensure that the power module 120 can normally obtain pressure data or flow data of the cooling medium.

By adopting the above technical solution, a redundant design for the second sampling device 213 is effectively achieved, thereby effectively improving the reliability of the energy storage system.

In some embodiments of this application, three second sampling devices 213 are provided.

When all the three second sampling devices 213 are in a normal operating state, a "two-out-of-three" logic determining method can be adopted. To be specific, pressure data or flow data collected by any two of the three second sampling devices 213 is transmitted to the power module 120. If one of the three second sampling devices 213 has a fault, the method can be switched to a "one-out-of-two" logic determining method. To be specific, pressure data or flow data collected by one of the two second sampling devices 213 in a normal operating state is transmitted to the power module 120. If two of the three second sampling devices 213 have a fault, the method can be switched to a "one-out-of-one" logic determining method. To be specific, pressure data or flow data collected by the second sampling device 213 in a normal operating state is transmitted to the power module 120.

By adopting the above technical solution, the accuracy of collecting pressure data or flow data of the cooling medium within the first circulation pipeline 211 is effectively improved, thereby reducing erroneous power-off situations of the power module 120 and further improving the reliability of the energy storage system.

In some embodiments of this application, referring to both FIG. 1 and FIG. 2, the first heat exchange mechanism 210 further includes a third sampling device 215 configured to collect conductivity data of the cooling medium within the first circulation pipeline 211, and the third sampling device 215 is electrically connected to the power module 120.

The third sampling device 215 is configured to collect conductivity data of the cooling medium within the first circulation pipeline 211. Optionally, the third sampling device 215 may be, but is not limited to, an electrode-type conductivity sensor and an inductive-type conductivity sensor. This is not specifically limited herein. In some embodiments, a body portion of the third sampling device 215 may be disposed on an outer pipe wall of the first circulation pipeline 211, and a monitoring end of the third sampling device 215 extends into the first circulation pipeline 211 to collect conductivity data of the cooling medium. In some other embodiments, the third sampling device 215 may alternatively be entirely disposed within the first circulation pipeline 211 to collect conductivity data of the cooling medium.

The electrical connection between the third sampling device 215 and the power module 120 refers to the existence of an electrical signal transmission path between the third sampling device 215 and the power module 120, and the conductivity data of the cooling medium collected by the third sampling device 215 can be transmitted to the power module 120 through the electrical signal transmission path.

In some embodiments, the third sampling device 215 is electrically connected to the second controller, the second controller is electrically connected to the first controller, and the conductivity data of the cooling medium collected by the third sampling device 215 is transmitted to the second controller and then transmitted to the first controller by the second controller. The first controller determines, based on the conductivity data, whether to activate the power-off protection function of the power module 120.

By adopting the above technical solution, the third sampling device 215 can transmit conductivity data of the cooling medium within the first circulation pipeline 211 to the power module 120, enabling the power module 120 to determine, based on the conductivity data, whether an actual cooling condition of the cooling apparatus 200 meets cooling requirements of the power module 120. If the actual cooling condition of the cooling apparatus 200 cannot meet the cooling requirements of the power module 120, the power module 120 can activate the power-off protection function. Thus, the cooling apparatus 200 possesses a conductivity sampling function and can transmit conductivity data to the power module 120 to meet the functional requirements of the power module 120 for the cooling apparatus 200, thereby better achieving the purpose of allowing the energy storage module 110 and the power module 120 to share the cooling apparatus 200 for cooling.

In some embodiments of this application, referring to both FIG. 1 and FIG. 2, the third sampling device 215 is disposed at a port of the first circulation pipeline 211 close to the cooling medium inlet of the energy storage apparatus 100.

Specifically, the energy storage apparatus 100 includes a cooling medium inlet and a cooling medium outlet, the first circulation pipeline 211 includes a low-temperature cooling medium outlet, the first circulation pipeline 211 includes a high-temperature cooling medium inlet, the low-temperature cooling medium outlet is connected to the cooling medium inlet of the energy storage apparatus 100, the high-temperature cooling medium inlet is connected to the cooling medium outlet of the energy storage apparatus 100, and the third sampling device 215 is disposed at a position of the first circulation pipeline 211 close to the low-temperature cooling medium outlet.

By adopting the above technical solution, the third sampling device 215 can collect conductivity data of the cooling medium located close to the cooling medium inlet of the energy storage apparatus 100, enabling the power module 120 to more accurately determine, based on the conductivity data, whether the actual cooling condition meets cooling requirements of the power module 120, to ensure that the power module 120 can timely activate the power-off protection function, thereby effectively improving the reliability of the energy storage system.

In some embodiments of this application, a plurality of third sampling devices 215 are provided.

The number of the third sampling devices 215 may be determined based on actual application needs. For example, two third sampling devices 215 are provided. When both the two third sampling devices 215 are in a normal operating state, conductivity data collected by either of the third sampling devices 215 can be transmitted to the power module 120. If one of the third sampling devices 215 has a fault, conductivity data collected by the other third sampling device 215 can be transmitted to the power module 120 to ensure that the power module 120 can normally obtain conductivity data of the cooling medium.

By adopting the above technical solution, a redundant design for the third sampling device 215 is effectively achieved, thereby effectively improving the reliability of the energy storage system.

In some embodiments of this application, three third sampling devices 215 are provided.

When all the three third sampling devices 215 are in a normal operating state, a "two-out-of-three" logic determining method can be adopted. To be specific, conductivity data collected by any two of the three third sampling devices 215 is transmitted to the power module 120. If one of the three third sampling devices 215 has a fault, the method can be switched to a "one-out-of-two" logic determining method. To be specific, conductivity data collected by one of the two third sampling devices 215 in a normal operating state is transmitted to the power module 120. If two of the three third sampling devices 215 have a fault, the method can be switched to a "one-out-of-one" logic determining method. To be specific, conductivity data collected by the third sampling device 215 in a normal operating state is transmitted to the power module 120.

By adopting the above technical solution, the accuracy of collecting conductivity data of the cooling medium within the first circulation pipeline 211 is effectively improved, thereby reducing erroneous power-off situations of the power module 120 and further improving the reliability of the energy storage system.

In some embodiments of this application, referring to both FIG. 1 and FIG. 2, the first heat exchange mechanism 210 includes a first sampling device 212, a second sampling device 213, and a third sampling device 215, where the first sampling device 212 is configured to collect temperature data of the cooling medium within the first circulation pipeline 211, the second sampling device 213 is configured to collect pressure data or flow data of the cooling medium within the first circulation pipeline 211, and the third sampling device 215 is configured to collect conductivity data of the cooling medium within the first circulation pipeline 211. The first sampling device 212, the second sampling device 213, and the third sampling device 215 are all electrically connected to the power module 120.

By adopting the above technical solution, the cooling apparatus 200 possesses a temperature sampling function, a conductivity sampling function, and a pressure or flow data sampling function, and can transmit temperature data, conductivity data, and pressure or flow data to the power module 120 to meet the functional requirements of the power module 120 for the cooling apparatus 200, thereby better achieving the purpose of allowing the energy storage module 110 and the power module 120 to share the cooling apparatus 200 for cooling.

In some embodiments of this application, referring to both FIG. 1 and FIG. 2, the first heat exchange mechanism 210 further includes a first deionization device 216, where the first deionization device 216 is disposed on the first circulation pipeline 211.

The first deionization device 216 is configured to adsorb ions in the cooling medium. In some embodiments, the first heat exchange mechanism 210 further includes a first bypass pipeline, where two open ends of the first bypass pipeline are both connected to the first circulation pipeline 211. For example, the first bypass pipeline is bridged across the first power pump 214, and the first deionization device 216 is disposed on the first bypass pipeline. During a flowing process of the cooling medium, part of the cooling medium flows into the first bypass pipeline and flows through the first deionization device 216, and the first deionization device 216 performs deionization treatment on this part of the cooling medium. Certainly, in other embodiments, the first deionization device 216 may alternatively be directly disposed on the first circulation pipeline 211, where the cooling medium within the first circulation pipeline 211 sequentially flows through the first deionization device 216, and the first deionization device 216 performs deionization treatment on the cooling medium. A plurality of first deionization devices 216 may be provided, and the plurality of first deionization devices 216 are connected in parallel to achieve a redundant design for the first deionization device 216, thereby effectively improving the reliability of the energy storage system. Optionally, the first deionization device 216 may be, but is not limited to, a capacitive deionizer and an electro-deionizer. This is not specifically limited herein.

When the content of ions in the cooling medium within the first circulation pipeline 211 is high, a potential difference occurs between the energy storage apparatus 100 and the cooling medium, leading to electrical corrosion in the energy storage apparatus 100. By adopting the above technical solution, the content of ions in the cooling medium within the first circulation pipeline 211 is effectively reduced, reducing the conductivity of the cooling medium, thereby mitigating electrical corrosion in the energy storage apparatus 100 and effectively improving the reliability of the energy storage system.

In some embodiments of this application, referring to both FIG. 1 and FIG. 2, the first heat exchange mechanism 210 may further include a first filter device 217. The first filter device 217 is disposed on the first circulation pipeline 211 and is configured to filter the cooling medium within the first circulation pipeline 211 to reduce the content of impurities in the cooling medium, thereby reducing the accumulation of the impurities within the energy storage apparatus 100. A plurality of first filter devices 217 may be provided, and the plurality of first filter devices 217 are connected in parallel on the first circulation pipeline 211 to achieve a redundant design for the first filter device 217, thereby effectively improving the reliability of the energy storage system. In some embodiments, referring to FIG. 5, the first filter device 217 may include a first filter body 2171 and a first pressure detection unit 2172, where the first filter body 2171 is disposed on the first circulation pipeline 211, the first pressure detection unit 2172 is connected in parallel with the first filter body 2171, and the first pressure detection unit 2172 is configured to detect an internal flow pressure of the first filter body 2171, so that personnel can determine, based on the internal flow pressure of the first filter body 2171, whether maintenance for the first filter device 217 is required.

In some embodiments of this application, referring to both FIG. 1 and FIG. 2, the first heat exchange mechanism 210 may further include a first pressure stabilization device 218. The first pressure stabilization device 218 is configured to stabilize the pressure of the cooling medium within the first circulation pipeline 211. For example, if the pressure of the cooling medium within the first circulation pipeline 211 is less than a preset value, the first pressure stabilization device 218 is started to increase the pressure of the cooling medium within the first circulation pipeline 211. In some embodiments, the first pressure stabilization device 218 is disposed on the first bypass pipeline described above. In some other embodiments, the first heat exchange mechanism 210 may further include a second bypass pipeline, where two open ends of the second bypass pipeline are both connected to the first circulation pipeline 211. For example, the second bypass pipeline is bridged across the first power pump 214, and the first pressure stabilization device 218 is disposed on the second bypass pipeline.

In some embodiments of this application, referring to FIG. 1, the cooling apparatus 200 further includes a second heat exchange mechanism 220, where the second heat exchange mechanism 220 is in thermally-conductive connection with the first heat exchange mechanism 210.

The second heat exchange mechanism 220 is configured to absorb heat from the first heat exchange mechanism 210.

The thermally-conductive connection between the second heat exchange mechanism 220 and the first heat exchange mechanism 210 refers to the existence of a heat conduction path between the second heat exchange mechanism 220 and the first heat exchange mechanism 210, and the heat from the first heat exchange mechanism 210 can be transferred to the second heat exchange mechanism 220 through the heat conduction path.

In some embodiments, heat conduction between the second heat exchange mechanism 220 and the first heat exchange mechanism 210 is achieved through a fluid medium.

In some other embodiments, heat conduction between the second heat exchange mechanism 220 and the first heat exchange mechanism 210 is achieved through a solid medium.

In still some other embodiments, heat conduction between the second heat exchange mechanism 220 and the first heat exchange mechanism 210 is achieved through a combination of a fluid medium and a solid medium. For example, the heat from the first heat exchange mechanism 210 is first transferred to the solid medium, then transferred to the fluid medium through the solid medium, and ultimately transferred to the second heat exchange mechanism 220 through the fluid medium.

By adopting the above technical solution, the heat from the cooling medium within the first heat exchange mechanism 210 is conveniently transferred outward, thereby achieving cooling of the energy storage module 110 and the power module 120.

In some embodiments of this application, referring to FIG. 1, the cooling apparatus 200 further includes a first heat exchange device 240, where the first heat exchange device 240 is connected between the second heat exchange mechanism 220 and the first heat exchange mechanism 210.

As a heat conduction path between the second heat exchange mechanism 220 and the first heat exchange mechanism 210, the first heat exchange device 240 is configured to transfer heat from the cooling medium within the first heat exchange mechanism 210 to a refrigerant within the second heat exchange mechanism 220. Optionally, the first heat exchange device 240 may be, but is not limited to, a plate heat exchanger, a double-pipe heat exchanger, a shell-and-tube heat exchanger, and a double-tube-sheet heat exchanger. This is not specifically limited herein.

By adopting the above technical solution, heat exchange between the second heat exchange mechanism 220 and the first heat exchange mechanism 210 is effectively achieved, thereby reducing mutual influence between the second heat exchange mechanism 220 and the first heat exchange mechanism 210.

In some embodiments of this application, referring to FIG. 1, the first heat exchange mechanism 210 includes a first circulation pipeline 211, the energy storage module 110 and the power module 120 are in thermally-conductive connection with the first circulation pipeline 211, the second heat exchange mechanism 220 includes a second circulation pipeline 221 and a refrigeration unit 222 disposed on the second circulation pipeline 221, and the first heat exchange device 240 is connected between the second circulation pipeline 221 and the first circulation pipeline 211.

The second circulation pipeline 221 is configured to provide a space for cyclic flowing of the refrigerant. Optionally, the second circulation pipeline 221 forms a loop structure. The loop structure may be, but is not limited to, a square loop structure and a circular loop structure. This is not specifically limited herein. The refrigeration unit 222 is configured to condense the refrigerant and provide flow power for the refrigerant within the second circulation pipeline 221. The refrigeration unit 222 is electrically connected to the second controller, and the second controller controls the operation of the refrigeration unit 222. Optionally, the refrigeration unit 222 may be, but is not limited to, a compression refrigeration unit, an absorption refrigeration unit, and a steam jet refrigeration unit. This is not specifically limited herein.

Specifically, the first heat exchange device 240 includes a first low-temperature inlet, a first high-temperature outlet, a first high-temperature inlet, and a first low-temperature outlet. The first low-temperature inlet and the first high-temperature outlet are both connected to the second circulation pipeline 221, and the first high-temperature inlet and the first low-temperature outlet are both connected to the first circulation pipeline 211. The cooling medium within the first circulation pipeline 211 enters the first heat exchange device 240 through the first high-temperature inlet of the first heat exchange device 240 and flows out of the first heat exchange device 240 through the first low-temperature outlet of the first heat exchange device 240. During this process, heat from the cooling medium within the first circulation pipeline 211 is transferred to the first heat exchange device 240. The refrigerant within the second circulation pipeline 221 enters the first heat exchange device 240 through the first low-temperature inlet of the first heat exchange device 240 and flows out of the first heat exchange device 240 through the first high-temperature outlet of the first heat exchange device 240. During this process, heat from the first heat exchange device 240 is transferred to the refrigerant within the second circulation pipeline 221, thereby achieving heat exchange between the second circulation pipeline 221 and the first circulation pipeline 211.

By adopting the above technical solution, heat exchange between the second circulation pipeline 221 and the first circulation pipeline 211 is facilitated.

In some embodiments of this application, referring to FIG. 2, the cooling apparatus 200 further includes a third heat exchange mechanism 230, where the second heat exchange mechanism 220 and the first heat exchange mechanism 210 are in thermally-conductive connection with each other via the third heat exchange mechanism 230.

The third heat exchange mechanism 230 is configured to absorb heat from the first heat exchange mechanism 210 and transfer the heat from the first heat exchange mechanism 210 to the second heat exchange mechanism 220.

The thermally-conductive connection between the second heat exchange mechanism 220 and the third heat exchange mechanism 230 refers to the existence of a heat conduction path between the second heat exchange mechanism 220 and the third heat exchange mechanism 230, and heat from the third heat exchange mechanism 230 can be transferred to the second heat exchange mechanism 220 through the heat conduction path.

In some embodiments, heat conduction between the second heat exchange mechanism 220 and the third heat exchange mechanism 230 is achieved through a fluid medium.

In some other embodiments, heat conduction between the second heat exchange mechanism 220 and the third heat exchange mechanism 230 is achieved through a solid medium.

In still some other embodiments, heat conduction between the second heat exchange mechanism 220 and the third heat exchange mechanism 230 is achieved through a combination of a fluid medium and a solid medium. For example, heat from the third heat exchange mechanism 230 is first transferred to the solid medium, then transferred to the fluid medium through the solid medium, and ultimately transferred to the second heat exchange mechanism 220 through the fluid medium.

The thermally-conductive connection between the first heat exchange mechanism 210 and the third heat exchange mechanism 230 refers to the existence of a heat conduction path between the third heat exchange mechanism 230 and the first heat exchange mechanism 210, and heat from the first heat exchange mechanism 210 can be transferred to the third heat exchange mechanism 230 through the heat conduction path.

In some embodiments, heat conduction between the third heat exchange mechanism 230 and the first heat exchange mechanism 210 is achieved through a fluid medium.

In some other embodiments, heat conduction between the third heat exchange mechanism 230 and the first heat exchange mechanism 210 is achieved through a solid medium.

In still some other embodiments, heat conduction between the third heat exchange mechanism 230 and the first heat exchange mechanism 210 is achieved through a combination of a fluid medium and a solid medium. For example, heat from the first heat exchange mechanism 210 is first transferred to the solid medium, then transferred to the fluid medium through the solid medium, and ultimately transferred to the third heat exchange mechanism 230 through the fluid medium.

By disposing the third heat exchange mechanism 230 between the first heat exchange mechanism 210 and the second heat exchange mechanism 220, a length of a cooling pipeline of the first heat exchange mechanism 210 is effectively shortened, thereby reducing the pressure of the cooling medium within the first heat exchange mechanism 210 to ensure that an operating pressure of the energy storage apparatus 100 is within a safe range.

In some embodiments of this application, referring to FIG. 2, the cooling apparatus 200 further includes a first heat exchange device 240 and a second heat exchange device 250, where the first heat exchange device 240 is connected between the second heat exchange mechanism 220 and the third heat exchange mechanism 230, and the second heat exchange device 250 is connected between the third heat exchange mechanism 230 and the first heat exchange mechanism 210.

As a heat conduction path between the second heat exchange mechanism 220 and the third heat exchange mechanism 230, the first heat exchange device 240 is configured to transfer heat from the cooling medium within the third heat exchange mechanism 230 to a refrigerant within the second heat exchange mechanism 220. Optionally, the first heat exchange device 240 may be, but is not limited to, a plate heat exchanger, a double-pipe heat exchanger, a shell-and-tube heat exchanger, and a double-tube-sheet heat exchanger. This is not specifically limited herein.

As a heat conduction path between the third heat exchange mechanism 230 and the first heat exchange mechanism 210, the second heat exchange device 250 is configured to transfer heat from the cooling medium within the first heat exchange mechanism 210 to a cooling medium within the third heat exchange mechanism 230. Optionally, the second heat exchange device 250 may be, but is not limited to, a plate heat exchanger, a double-pipe heat exchanger, a shell-and-tube heat exchanger, and a double-tube-sheet heat exchanger. This is not specifically limited herein.

By adopting the above technical solution, heat exchange between the second heat exchange mechanism 220 and the third heat exchange mechanism 230 as well as heat exchange between the third heat exchange mechanism 230 and the first heat exchange mechanism 210 are effectively achieved, thereby reducing mutual influence between the second heat exchange mechanism 220 and the third heat exchange mechanism 230 as well as mutual interference between the third heat exchange mechanism 230 and the first heat exchange mechanism 210.

In some embodiments of this application, referring to FIG. 2, the first heat exchange mechanism 210 includes a first circulation pipeline 211, the energy storage module 110 and the power module 120 are in thermally-conductive connection with the first circulation pipeline 211, the second heat exchange mechanism 220 includes a second circulation pipeline 221 and a refrigeration unit 222 disposed on the second circulation pipeline 221, the third heat exchange mechanism 230 includes a third circulation pipeline 231, the first heat exchange device 240 is connected between the second circulation pipeline 221 and the third circulation pipeline 231, and the second heat exchange device 250 is connected between the third circulation pipeline 231 and the first circulation pipeline 211.

The third circulation pipeline 231 is configured to provide a space for cyclic flowing of the cooling medium. Optionally, the third circulation pipeline 231 forms a loop structure. The loop structure may be, but is not limited to, a square loop structure and a circular loop structure. This is not specifically limited herein. In some embodiments, the third heat exchange mechanism 230 further includes a second power pump 232, where the second power pump 232 is disposed on the third circulation pipeline 231 and is configured to provide flow power for the cooling medium. The second power pump 232 is electrically connected to the second controller, and the second controller controls the operation of the second power pump 232. A plurality of second power pumps 232 may be provided, and the plurality of second power pumps 232 are connected in parallel to achieve a redundant design for the second power pump 232. Optionally, the second power pump 232 may be, but is not limited to, a gear pump, a vane pump, a plunger pump, and a screw pump. This is not specifically limited herein.

Specifically, the first heat exchange device 240 includes a first low-temperature inlet, a first high-temperature outlet, a first high-temperature inlet, and a first low-temperature outlet. The first low-temperature inlet and the first high-temperature outlet are both connected to the second circulation pipeline 221, and the first high-temperature inlet and the first low-temperature outlet are both connected to the third circulation pipeline 231. The cooling medium within the third circulation pipeline 231 enters the first heat exchange device 240 through the first high-temperature inlet of the first heat exchange device 240 and flows out of the first heat exchange device 240 through the first low-temperature outlet of the first heat exchange device 240. During this process, heat from the cooling medium within the third circulation pipeline 231 is transferred to the first heat exchange device 240. The refrigerant within the second circulation pipeline 221 enters the first heat exchange device 240 through the first low-temperature inlet of the first heat exchange device 240 and flows out of the first heat exchange device 240 through the first high-temperature outlet of the first heat exchange device 240. During this process, heat from the first heat exchange device 240 is transferred to the refrigerant within the second circulation pipeline 221, thereby achieving heat exchange between the second circulation pipeline 221 and the third circulation pipeline 231.

The second heat exchange device 250 includes a second low-temperature inlet, a second high-temperature outlet, a second high-temperature inlet, and a second low-temperature outlet. The second low-temperature inlet and the second high-temperature outlet are both connected to the third circulation pipeline 231, and the second high-temperature inlet and the second low-temperature outlet are both connected to the first circulation pipeline 211. The cooling medium within the first circulation pipeline 211 enters the second heat exchange device 250 through the second high-temperature inlet of the second heat exchange device 250 and flows out of the second heat exchange device 250 through the second low-temperature outlet of the second heat exchange device 250. During this process, heat from the cooling medium within the first circulation pipeline 211 is transferred to the second heat exchange device 250. The cooling medium within the third circulation pipeline 231 enters the second heat exchange device 250 through the second low-temperature inlet of the second heat exchange device 250 and flows out of the second heat exchange device 250 through the second high-temperature outlet of the second heat exchange device 250. During this process, heat from the second heat exchange device 250 is transferred to the cooling medium within the third circulation pipeline 231, thereby achieving heat exchange between the first circulation pipeline 211 and the third circulation pipeline 231.

By adopting the above technical solution, heat exchange between the second circulation pipeline 221 and the third circulation pipeline 231 as well as heat exchange between the third circulation pipeline 231 and the first circulation pipeline 211 are facilitated.

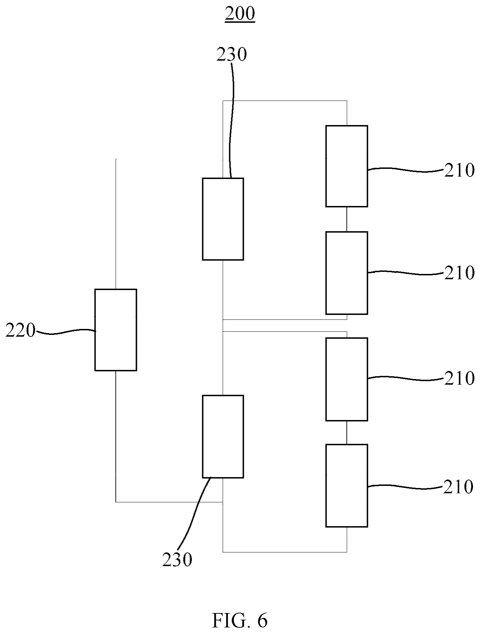

In some embodiments of this application, referring to FIG. 6, a plurality of third heat exchange mechanisms 230 are provided, and the second heat exchange mechanism 220 is in thermally-conductive connection with the plurality of third heat exchange mechanisms 230.

The number of the third heat exchange mechanisms 230 may be determined based on actual operating conditions, for example, two, three, or more third heat exchange mechanisms 230 may be provided. This is not specifically limited herein.

By adopting the above technical solution, the second heat exchange mechanism 220 can simultaneously exchange heat with the plurality of third heat exchange mechanisms 230, effectively improving the operational efficiency of the cooling apparatus 200.

In some embodiments of this application, referring to FIG. 6, a plurality of first heat exchange mechanisms 210 are provided, and the third heat exchange mechanism 230 is in thermally-conductive connection with the plurality of first heat exchange mechanisms 210.

The number of the first heat exchange mechanisms 210 may be determined based on actual operating conditions, for example, two, three, or more first heat exchange mechanisms 210 may be provided. This is not specifically limited herein.

By adopting the above technical solution, the third heat exchange mechanism 230 can simultaneously exchange heat with the plurality of first heat exchange mechanisms 210, effectively improving the operational efficiency of the cooling apparatus 200.

In some embodiments of this application, referring to FIG. 6, a plurality of first heat exchange mechanisms 210 and a plurality of third heat exchange mechanisms 230 are provided, the second heat exchange mechanism 220 is in thermally-conductive connection with the plurality of third heat exchange mechanisms 230, and each third heat exchange mechanism 230 is in thermally-conductive connection with the plurality of first heat exchange mechanisms 210.

By adopting the above technical solution, the second heat exchange mechanism 220 can simultaneously exchange heat with the plurality of third heat exchange mechanisms 230, and the third heat exchange mechanism 230 can simultaneously exchange heat with the plurality of first heat exchange mechanisms 210, effectively improving the operational efficiency of the cooling apparatus 200.

In some embodiments of this application, referring to both FIG. 1 and FIG. 2, the third heat exchange mechanism 230 may further include a fifth sampling device 233, a sixth sampling device 234, a seventh sampling device 235, a second deionization device 236, a second filter device 237, and a second pressure stabilization device 238.

The fifth sampling device 233 is configured to collect temperature data of the cooling medium within the third circulation pipeline 231. Optionally, the fifth sampling device 233 may be, but is not limited to, a thermistor sensor, a thermocouple sensor, and a platinum resistance temperature sensor. This is not specifically limited herein. In some embodiments, a body portion of the fifth sampling device 233 may be disposed on an outer pipe wall of the third circulation pipeline 231, and a monitoring end of the fifth sampling device 233 extends into the third circulation pipeline 231 to collect temperature data of the cooling medium. In some other embodiments, the fifth sampling device 233 may alternatively be entirely disposed within the third circulation pipeline 231 to collect temperature data of the cooling medium.

The sixth sampling device 234 is configured to collect pressure data or flow data of the cooling medium within the third circulation pipeline 231. In other words, the sixth sampling device 234 may be a pressure sampling device, and the pressure sampling device may be, but is not limited to, a diffused silicon pressure transmitter, a semiconductor piezoelectric impedance diffusion pressure sensor, and an electrostatic capacity-type pressure sensor. This is not specifically limited herein. The sixth sampling device 234 may alternatively be a flow sampling device, and the flow sampling device may be, but is not limited to, a centrifugal flow sensor, a water resistance flow sensor, and a dynamic pressure head flow sensor. This is not specifically limited herein. In some embodiments, a body portion of the sixth sampling device 234 may be disposed on an outer pipe wall of the third circulation pipeline 231, and a monitoring end of the sixth sampling device 234 extends into the third circulation pipeline 231 to collect pressure data or flow data of the cooling medium. In some other embodiments, the sixth sampling device 234 may alternatively be entirely disposed within the third circulation pipeline 231 to collect pressure data or flow data of the cooling medium.

The seventh sampling device 235 is configured to collect conductivity data of the cooling medium within the third circulation pipeline 231. Optionally, the seventh sampling device 235 may be, but is not limited to, an electrode-type conductivity sensor and an inductive-type conductivity sensor. This is not specifically limited herein. In some embodiments, a body portion of the seventh sampling device 235 may be disposed on an outer pipe wall of the third circulation pipeline 231, and a monitoring end of the seventh sampling device 235 extends into the third circulation pipeline 231 to collect conductivity data of the cooling medium. In some other embodiments, the seventh sampling device 235 may alternatively be entirely disposed within the third circulation pipeline 231 to collect conductivity data of the cooling medium.

The second deionization device 236 is configured to adsorb ions in the cooling medium within the third circulation pipeline 231. In some embodiments, the third heat exchange mechanism 230 further includes a third bypass pipeline, where two open ends of the third bypass pipeline are both connected to the third circulation pipeline 231. For example, the third bypass pipeline is bridged across the second power pump 232, and the second deionization device 236 is disposed on the third bypass pipeline. During a flowing process of the cooling medium, part of the cooling medium flows into the third bypass pipeline and flows through the second deionization device 236, and the second deionization device 236 performs deionization treatment on this part of the cooling medium. Certainly, in other embodiments, the second deionization device 236 may alternatively be directly disposed on the third circulation pipeline 231, where the cooling medium within the third circulation pipeline 231 sequentially flows through the second deionization device 236, and the second deionization device 236 performs deionization treatment on the cooling medium. A plurality of second deionization devices 236 may be provided, and the plurality of second deionization devices 236 are connected in parallel to achieve a redundant design for the second deionization device 236. Optionally, the second deionization device 236 may be, but is not limited to, a capacitive deionizer and an electro-deionizer. This is not specifically limited herein.

The second filter device 237 is disposed on the third circulation pipeline 231 and is configured to filter the cooling medium within the third circulation pipeline 231 to reduce the content of impurities in the cooling medium. A plurality of second filter devices 237 may be provided, and the plurality of second filter devices 237 are connected in parallel on the third circulation pipeline 231 to achieve a redundant design for the second filter device 237, thereby effectively improving the reliability of the energy storage system. In some embodiments, the second filter device 237 may include a second filter body (not shown in the figures) and a second pressure detection unit (not shown in the figures), where the second filter body is disposed on the third circulation pipeline 231, the second pressure detection unit is connected in parallel with the second filter body, and the second pressure detection unit is configured to detect an internal flow pressure of the second filter body, so that personnel can determine, based on the internal flow pressure of the second filter body, whether maintenance for the second filter device 237 is required.

The second pressure stabilization device 238 is configured to stabilize the pressure of the cooling medium within the third circulation pipeline 231. For example, if the pressure of the cooling medium within the third circulation pipeline 231 is less than a preset value, the second pressure stabilization device 238 is started to increase the pressure of the cooling medium within the third circulation pipeline 231. In some embodiments, the second pressure stabilization device 238 is disposed on the third bypass pipeline described above. In some other embodiments, the third heat exchange mechanism 230 may further include a fourth bypass pipeline, where two open ends of the fourth bypass pipeline are both connected to the third circulation pipeline 231. For example, the fourth bypass pipeline is bridged across the second power pump 232, and the second pressure stabilization device 238 is disposed on the fourth bypass pipeline.

In some embodiments of this application, referring to both FIG. 1 and FIG. 2, the energy storage system further includes an energy storage compartment 300 and a temperature and humidity adjustment apparatus 400, the energy storage apparatus 100 is disposed within the energy storage compartment 300, and the temperature and humidity adjustment apparatus 400 includes a fourth sampling device 420, where the fourth sampling device 420 is configured to collect temperature and humidity data within the energy storage compartment 300.

The energy storage compartment 300 is configured to provide an accommodation space for the energy storage apparatus 100. The cooling apparatus 200 may be partially accommodated within the energy storage compartment 300 or entirely accommodated within the energy storage compartment 300. Optionally, the energy storage compartment 300 may be, but is not limited to, a reinforced concrete construction and a container. This is not specifically limited herein.

The fourth sampling device 420 is configured to collect temperature and humidity data within the energy storage compartment 300. Optionally, the fourth sampling device 420 may be, but is not limited to, an analog-type temperature and humidity sensor, a 485-type temperature and humidity sensor, and a network-type temperature and humidity sensor. This is not specifically limited herein.

By adopting the above technical solution, monitoring of the temperature and humidity within the energy storage compartment 300 is facilitated.

In some embodiments of this application, referring to both FIG. 1 and FIG. 2, the temperature and humidity adjustment apparatus 400 further includes a temperature and humidity adjustment unit 410, an adjustment working end of the temperature and humidity adjustment unit 410 is connected to the energy storage compartment 300, and the fourth sampling device 420 is electrically connected to the temperature and humidity adjustment unit 410.

The temperature and humidity adjustment unit 410 is configured to adjust temperature and humidity within the energy storage compartment 300. Optionally, the temperature and humidity adjustment unit 410 may be an air conditioner or the like. This is not specifically limited herein. In an example in which the temperature and humidity adjustment unit 410 is an air conditioner, the adjustment working end of the temperature and humidity adjustment unit 410 is an air outlet of the temperature and humidity adjustment unit 410, and the air outlet is connected to the energy storage compartment 300.

The fourth sampling device 420 is electrically connected to the temperature and humidity adjustment unit 410, meaning that an electrical signal transmission path exists between the fourth sampling device 420 and the temperature and humidity adjustment unit 410. For example, the fourth sampling device 420 and the temperature and humidity adjustment unit 410 are connected via a signal cable. Temperature and humidity data collected by the fourth sampling device 420 can be transmitted to the temperature and humidity adjustment unit 410 through the electrical signal transmission path. If the temperature and humidity data collected by the fourth sampling device 420 exceeds a preset value range, the temperature and humidity adjustment unit 410 is started to adjust the temperature and humidity within the energy storage compartment 300 to be within the preset value range.

By adopting the above technical solution, condensation on an outer pipe wall of a pipeline of the cooling apparatus 200 is effectively mitigated, thereby effectively improving the cooling effect of the cooling apparatus 200.

The above descriptions are merely optional embodiments of this application and are not intended to limit this application. For those skilled in the art, this application may have various modifications and variations. Any modifications, equivalent replacements, improvements, and the like made within the spirit and principles of this application shall be included within the scope of the claims of this application.

## Claims

1. An energy storage system, wherein the energy storage system comprises:
an energy storage apparatus comprising an energy storage module and a power module; and
a cooling apparatus comprising a first heat exchange mechanism, wherein the energy storage module and the power module are in thermally-conductive connection with the first heat exchange mechanism.

2. The energy storage system according to claim 1, wherein the first heat exchange mechanism comprises a first circulation pipeline, and the energy storage module and the power module are in thermally-conductive connection with the first circulation pipeline.

3. The energy storage system according to claim 2, wherein the first heat exchange mechanism further comprises a first sampling device, the first sampling device is configured to collect temperature data of a cooling medium within the first circulation pipeline, and the first sampling device is electrically connected to the power module.

4. The energy storage system according to claim 3, wherein the first sampling device is disposed at a port of the first circulation pipeline close to a cooling medium inlet of the energy storage apparatus.

5. The energy storage system according to claim 3 or 4, wherein a plurality of first sampling devices are provided.

6. The energy storage system according to any one of claims 2 to 5, wherein the first heat exchange mechanism further comprises a second sampling device, the second sampling device is configured to collect pressure data or flow data of the cooling medium within the first circulation pipeline, and the second sampling device is electrically connected to the power module.

7. The energy storage system according to claim 6, wherein the second sampling device is disposed at a port of the first circulation pipeline close to the cooling medium inlet of the energy storage apparatus.

8. The energy storage system according to claim 6 or 7, wherein a plurality of second sampling devices are provided.

9. The energy storage system according to any one of claims 2 to 8, wherein the first heat exchange mechanism further comprises a third sampling device configured to collect conductivity data of the cooling medium within the first circulation pipeline, and the third sampling device is electrically connected to the power module.

10. The energy storage system according to claim 9, wherein the third sampling device is disposed at a port of the first circulation pipeline close to the cooling medium inlet of the energy storage apparatus.

11. The energy storage system according to claim 9 or 10, wherein a plurality of third sampling devices are provided.

12. The energy storage system according to any one of claims 2 to 11, wherein the first heat exchange mechanism further comprises a first deionization device, and the first deionization device is disposed on the first circulation pipeline.

13. The energy storage system according to claim 1, wherein the cooling apparatus further comprises a second heat exchange mechanism, and the second heat exchange mechanism is in thermally-conductive connection with the first heat exchange mechanism.

14. The energy storage system according to claim 13, wherein the cooling apparatus further comprises a first heat exchange device, and the first heat exchange device is connected between the second heat exchange mechanism and the first heat exchange mechanism.

15. The energy storage system according to claim 14, wherein the first heat exchange mechanism comprises a first circulation pipeline; the energy storage module and the power module are in thermally-conductive connection with the first circulation pipeline; the second heat exchange mechanism comprises a second circulation pipeline and a refrigeration unit disposed on the second circulation pipeline; and the first heat exchange device is connected between the second circulation pipeline and the first circulation pipeline.

16. The energy storage system according to claim 13, wherein the cooling apparatus further comprises a third heat exchange mechanism, and the second heat exchange mechanism and the first heat exchange mechanism are in thermally-conductive connection with each other via the third heat exchange mechanism.

17. The energy storage system according to claim 16, wherein the cooling apparatus further comprises a first heat exchange device and a second heat exchange device, the first heat exchange device is connected between the second heat exchange mechanism and the third heat exchange mechanism, and the second heat exchange device is connected between the third heat exchange mechanism and the first heat exchange mechanism.

18. The energy storage system according to claim 17, wherein the first heat exchange mechanism comprises a first circulation pipeline; the energy storage module and the power module are in thermally-conductive connection with the first circulation pipeline; the second heat exchange mechanism comprises a second circulation pipeline and a refrigeration unit disposed on the second circulation pipeline; the third heat exchange mechanism comprises a third circulation pipeline; the first heat exchange device is connected between the second circulation pipeline and the third circulation pipeline; and the second heat exchange device is connected between the third circulation pipeline and the first circulation pipeline.

19. The energy storage system according to any one of claims 16 to 18, wherein a plurality of third heat exchange mechanisms are provided, and the second heat exchange mechanism is in thermally-conductive connection with the plurality of third heat exchange mechanisms.

20. The energy storage system according to any one of claims 16 to 19, wherein a plurality of first heat exchange mechanisms are provided, and the third heat exchange mechanism is in thermally-conductive connection with the plurality of first heat exchange mechanisms.

21. The energy storage system according to any one of claims 1 to 20, wherein the energy storage system further comprises an energy storage compartment and a temperature and humidity adjustment apparatus, the energy storage apparatus is disposed within the energy storage compartment, and the temperature and humidity adjustment apparatus comprises a fourth sampling device configured to collect temperature and humidity data within the energy storage compartment.

22. The energy storage system according to claim 21, wherein the temperature and humidity adjustment apparatus further comprises a temperature and humidity adjustment unit, an adjustment working end of the temperature and humidity adjustment unit is connected to the energy storage compartment, and the fourth sampling device is electrically connected to the temperature and humidity adjustment unit.
